# EUROPÄISCHE PATENTSCHRIFT

(11) **EP 2 659 530 B1**
(45) Veröffentlichungstag und Bekanntmachung des Hinweises auf die Patenterteilung: **18.12.2019**
(21) Anmeldenummer: 11757189.3
(22) Anmeldetag: 04.08.2011
(51) Int. Cl.: H01M 2/10, G01C 3/02

(54) **BATTERIEFACH MIT KOMMUNIKATIONS-SCHNITTSTELLE SOWIE MESSGERÄT MIT DEM BATTERIEFACH**
BATTERY CASING WITH COMMUNICATION INTERFACE AND MEASURING DEVICE WITH THE BATTERY CASING
BOÎTIER À PILES AVEC INTERFACE DE COMMUNICATION ET DISPOSITIF DE MESURE AVEC LE BOÎTIER À PILES

(30) Priorität: 23.09.2010 DE 102010041278
(43) Veröffentlichungstag der Anmeldung: 06.11.2013
(73) Patentinhaber: Robert Bosch GmbH, 70442 Stuttgart (DE)
(72) Erfinder: HALAVART, Cafer, 89081 Ulm (DE); GIESEN, Florian, 70771 Leinfelden (DE)
(86) Internationale Anmeldenummer: PCT/EP2011/063466
(87) Internationale Veröffentlichungsnummer: WO 2012/038142

(56) Entgegenhaltungen:
- EP-A1- 1 662 606
- EP-A2- 0 339 628
- DE-A1- 19 914 541
- JP-A- 2001 021 344
- US-A1- 2007 030 348
- US-A1- 2009 174 659

## Beschreibung

Die vorliegende Erfindung betrifft ein Batteriefach eines Laserentfernungsmessers, mit einer Aufnahme für Batterien sowie einem Abdeckelement und einem Verschlusselement.

### Stand der Technik

Batteriebetriebene elektrische Geräte sind in unterschiedlichen Ausführungsformen bekannt und können insbesondere als Laserentfernungsmesser ausgebildet sein. Die Geräte besitzen üblicherweise ein Batteriefach, das in einem Gerätegehäuse untergebracht ist und Aufnahmen aufweist, in welche die Batterien einlegbar sind. Den einzelnen Aufnahmen sind dabei elektrische Kontakte zugeordnet, über welche die Batterien beim Einlegen angeschlossen und mit der Elektronik des Gerätes verbunden werden.

Aus der DE-199 14 541 A1 ist ein Batteriefach bekannt, welches in eine Laserwasserwaage eingesetzt werden kann und als solches dem Gerät auch wieder entnommen werden kann. Das Batteriefach ist in der Art einer Schublade aufgebaut, so dass die Batterien zuerst in das Batteriefach eingelegt werden können und das Batteriefach dann inklusive Batterien in das Gerät eingesetzt wird.

Die EP 0339 628 A2 offenbart ein Mobiltelephon mit einem an das Gehäuse anclipsbaren zweiten Gehäuseteil, welches einen Batteriepack in einem Batteriefach aufweist. Räumlich neben dem Batteriepack und getrennt von diesem ist in dem anclipsbaren zweiten Gehäuseteil die Antenne des Mobiltelephons angeordnet. Batteriepack und Antenne der EP 0339 628 A2 besitzen eine gemeinsame Abdeckung, die das Gehäuse des Mobiltelephons vervollständigt.

Die US 2007/0030348 A1 offenbart ein drahtloses Kommunikationsgerät mit integriertem Laserentfernungsmesser.

Die JP 2001-21344 A offenbart einen Laserentfernungsmesser mit einem darin eingebrachten Batterieaufnahmeteil.

### Offenbarung der Erfindung

Die Erfindung betrifft ein Batteriefach eines elektrischen Geräts, das erfindungsgemäß als handgehaltenenr Laserentfernungsmesser realisiert ist. Das Batteriefach ist als ein separates Teil ausgebildet, welches sich modular in das Gehäuse des Messgerätes einsetzen und mit diesem verbinden lässt.

Das Batteriefach weist zumindest eine Aufnahme für zumindest ein Energiespeicherelement, wie beispielsweise eine Batterie, eine wiederaufladbare Batterie oder auch ein Akku-Element auf. Darüber hinaus besitzt das Batteriefach zumindest einen elektrischen Kontakt, mit dem das Batteriefach und insbesondere die in das Batteriefach eingelegte Energiespeicherelement mit der Elektronik des Messgerätes verbunden sind.

Das Batteriefach verfügt über eine Schnittstelle zur Kommunikation mit einer externen Anwendung.

Unter einer externen Anwendung wird erfindungsgemäß eine von dem Laserentfernungsmesser getrennte Anordnung, wie beispielsweise ein separater PC (hier als synonym für einen Computer), ein PDA (personal digital assistant), eine Mobiltelephon, insbesondere ein internetfähiges "smartphone" eine externe Datenbank oder dergleichen verstanden.

Vorteilhafter Weise ist damit die Erweiterung von bestehenden Messgeräten um diese Funktionalität möglich. Durch den modularen Aufbau des Batteriefaches als eine vom Gehäuse des Messgerätes trennbare Einheit, müssen keine oder nur unwesentliche Änderungen an dem Messgerät selbst vorgenommen werden. Die Schnittstelle zur externen Kommunikation, eine zugehörige Elektronik und deren Ankopplung an das Messgerät bilden somit ein Kommunikationsmodul, welches im Batteriefach des elektrischen Gerätes angeordnet ist und mit diesem beispielsweise auch ausgetauscht werden kann.

Die im Batteriefach integrierte modulare Erweiterung zur Kommunikation, insbesondere zur Datenübermittlung, erlaubt eine Kostensenkung für das Messsystem, da die erfindungsgemäße Kommunikationseinheit nicht in allen Geräten einer Serie integriert sein muss, sondern beispielsweise auf besonderen Wunsch eines Kunden ausgeliefert oder nachgerüstet werden kann.

Dass Messgerät selbst muss dann nur über eine entsprechende Möglichkeit, beispielsweise eine mechanische Kontaktierung zur Datenübermittlung mit dem erfindungsgemäßen Batteriefach verfügen. Das erfindungsgemäße Batteriefach verfügt daher über zumindest ein Kontaktelement zur Datenübertragung zwischen Messgerät und Batteriefach. Dieses Kontaktelement ist typischerweise mechanisch ausgebildet, könnte jedoch auch drahtlos sein. Vorteilhafter Weise ist daher zumindest ein weiterer Kontaktstift im Batteriefach vorgesehen, über den der Datentransfer zwischen dem Messgerät und dem Batteriefach erfolgt. Prinzipiell ist es jedoch auch möglich, diesen Datentransfer über die Kontaktelemente zu realisieren, die der Energieversorgung des Messgerätes dienen.

Ein Grundgedanke der Erfindung ist es also, dass sowohl die Batterien als auch das Kommunikationsmodul an dem Batteriefacheinschub gehalten sind, wodurch sie beim Entfernen des Batteriefachs automatisch mit aus dem Gehäuse entnommen werden. Somit sind die Batterien und Kommunikationsmodul leicht zugänglich, so dass sie auf einfache Weise aus dem Halter entnommen und in diesen eingesetzt werden können. In vorteilhafter weise kann dabei der Bauraum des Batteriefaches genutzt werden, um die Bauelemente des Kommunikationsmoduls unter zu bringen.

Die Integration der Kommunikationsschnittstelle zum Datenaustausch mit einer externen Anwendung bietet darüber hinaus eine ganze Reihe weiterer Vorteile.

Ein Anwender muss bei der Beschaffung des Grundgerätes beispielsweise keine Entscheidung treffen, ob und welche Kommunikationsstandards er künftig verwenden möchte. Insbesondere ist es auch möglich, von einem ersten Kommunikationsstandard auf einen zweiten, unterschiedlichen Kommunikationsstandard zu wechseln, ohne das teure Messgerät an sich zu wechseln.

Im Grundgerät, d.h. dem Laserentfernungsmesser, muss kein zusätzlicher Bauraum geschaffen werden, um die Integration der Kommunikationselektronik zu integrieren oder einen Einsteckplatz für ein separates Kommunikationsmodul vorzusehen.

Im Grundgerät, d.h. dem Laserentfernungsmesser, entstehen keine Zusatzkosten für die Spannungsversorgung der Kommunikationseinheit, da diese direkt im Batteriefach integriert ist.

In vorteilhafter Weise kann das Modul so ausgebildet sein, dass es vollständig und formschlüssig im Gehäuse des Messgerätes integriert ist.
In vorteilhafter Weise ist die, im Batteriefach integrierte Schnittstelle dabei zur drahtlosen Kommunikation mit der externen Anwendung ausgebildet.

Die Schnittstelle kann dabei einen der bekannten Kommunikationsstandards, wie beispielsweise Bluetooth oder WLAN oder USB oder Firewire, unterliegen. Prinzipiell ist jedoch auch eine drahtgebundene Kommunikation, beispielsweise über eine RS232 Schnittstelle, möglich.

Das erfindungsgemäße Batteriefach verfügt über zumindest eine Elektronikeinheit, insbesondere eine Elektronikeinheit für die Kommunikationselektronik der erfindungsgemäßen Schnittstelle. So können beispielsweise eine oder auch zwei Platinen für die Kommunikationselektronik, beispielsweise mit einem Bluetooth-Chip versehen sein und in das Batteriefach integriert sein. Die Kommunikationselektronik erhält ihre Energieversorgung in vorteilhafter Weise aus den Energiespeicherelementen des Batteriefaches. Die Elektronikeinheit des erfindungsgemäßen Batteriefaches ist in vorteilhafter Weise über ein Kommunikationselement, beispielsweise über einen zusätzlichen Kommunikationspin mit der Elektronik des Messgerätes, insbesondere mit der Auswertungselektronik des Messgerätes verbunden, um den Datentransfer zwischen Messgerät und Batteriefach zu realisieren.

In vorteilhafter Weise ist das Batteriefach schubladenförmig ausgebildet und weist eine Aufnahme als Trägerelement für die Energiespeicherelemente auf. Darüber hinaus besitzt das erfindungsgemäße Batteriefach ein Abdeckelement, welches das Messgerätgehäuse bei eingesetztem Batteriefach verschließt.

Bei vielen Anwendungen müssen elektrische und elektronische Geräte unter erschwerten Umweltbedingungen über viele Jahre sicher arbeiten. Außer dem zulässigen Temperaturbereich stellt die chemische Belastung, hierunter wird die Beständigkeit gegen aggressive Medien in der Industrie wie Dämpfe, Säuren, Laugen, Öl oder Kraftstoffe verstanden, eine Einsatzbeschränkung dar. Zudem muss das Eindringen von Nässe und Fremdkörpern, wie zum Beispiel Staub, für eine zuverlässige Funktion verhindert werden.

Bezüglich ihrer Eignung für verschiedene Umgebungsbedingungen werden die Systeme in entsprechende Schutzarten, sogenannte IP-Codes eingeteilt. Die Abkürzung IP steht laut DIN für *International Protection,* wird aber im Englischen Sprachraum als *Ingress Protection* (deutsch: Eindringschutz) verwendet.

In weiter vorteilhafter Weise ist das erfindungsgemäße Batteriefach daher als ein nach dem "IP54 Standard" geschütztes Batteriefach, ausgebildet.

Dazu weist das Abdeckelement des Batteriefaches in vorteilhafter Weise unter anderem auf seiner der Aufnahme zugewandten Seite Dichtmittel, wie beispielsweise ein Dichtring auf.

Auf diese Weise kann ein Messgerät, das erfindungsgemäß als Laserentfernungsmesser realisiert ist, mit einem zusätzlichen Kommunikationsmodul versehen werden und eine
Batterie gestützte Spannungsversorgung sowie den entsprechenden IP-Schutz gewährleisten, ohne dass das Grundgerät selbst der Zusatzkosten für den IP-Schutz bedarf. Das Messgerät selbst, welches das erfindungsgemäße Batteriefach aufnimmt, wird somit weder mit zusätzlichen Kosten noch mit anderen Nachteilen, wie zum Beispiel der Zunahme der Baugröße, "belastet". Da sich die gesamte Elektronik des Kommunikationsmoduls im IP-geschützten Batteriefach befindet, sind in vorteilhafter Weise keine zusätzlichen Maßnahmen zum Elektronikschutz erforderlich.

Weitere Vorteile des erfindungsgemäßen Batteriefaches sowie eines Messgerätes mit einem solchen Batteriefach ergeben sich aus den nachfolgenden Zeichnungen und der Beschreibung eines Ausführungsbeispiels.

### Zeichnungen

In den Zeichnungen ist ein Ausführungsbeispiel der Erfindung dargestellt. Die Zeichnungen, die Beschreibung und die Ansprüche enthalten zahlreiche Merkmale in Kombination.

In der Zeichnung zeigt:
- Figur 1: eine Vorderansicht eines erfindungsgemäßen elektrischen Geräts,
- Figur 2: ein Batteriefach mit Batterien des in Figur 1 gezeigten elektrischen Geräts in einer perspektivischen Ansicht,
- Figur 3: das Batteriefach mit Batterien gemäß Figur 2 in rückwärtiger Ansicht,
- Figur 4: ein Batteriefach ohne Batterien und ohne das erfindungsgemäße Kommunikationsmodul,
- Figur 5: einen Verschlussbolzen für das erfindungsgemäße Batteriefach, in vergrößerter Darstellung,
- Figur 6: eine Detailansicht eines elektrischen Gerätes mit eingesetztem Batteriefach in einer Schnittdarstellung,
- Figur 7: eine Detailansicht aus Figur 1 zur Verdeutlichung des Verschlussmechanismus des erfindungsgemäßen Batteriefaches,
- Figur 8: ein Batteriefach ohne Batterien und ohne das erfindungsgemäße Kommunikationsmodul gemäß Figur 4,
- Figur 9: ein erfindungsgemäßes Batteriefach ohne Batterien mit zusätzlichem Kontaktelement für das erfindungsgemäße Kommunikationsmodul,
- Figur 10: das erfindungsgemäße Batteriefach in einer rückwärtigen Ansicht,
- Figur 11: das erfindungsgemäße Batteriefach mit eingesetzten Batterien in einer rückwärtigen Ansicht,
- Figur 12: das erfindungsgemäße Batteriefach in einer perspektivischen Aufsicht.

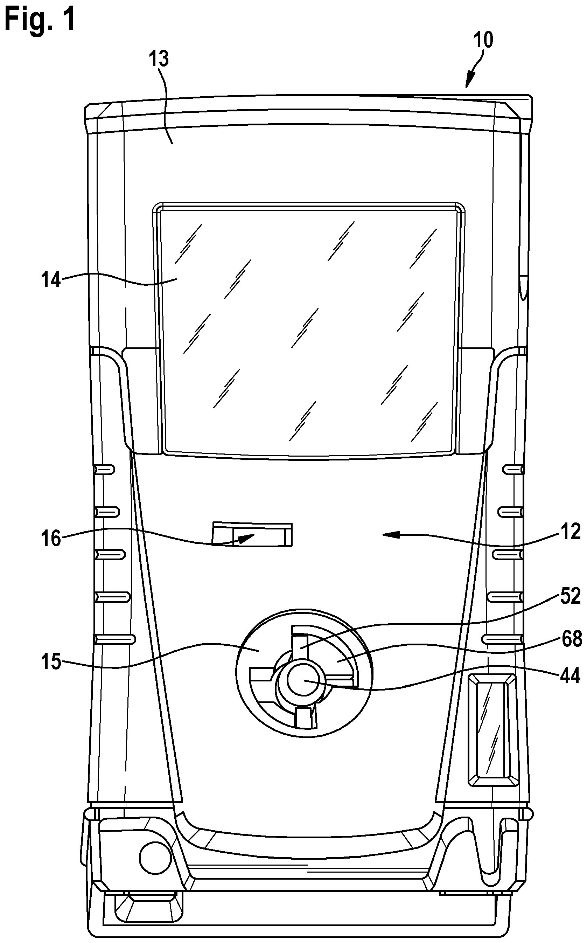

In Figur 1 der Zeichnung ist ein elektrisches Gerät 10 gemäß der vorliegenden Erfindung gezeigt, das erfindungsgemäß als Laserentfernungsmesser ausgebildet ist. Der Laserentfernungsmesser 10 umfasst ein Gehäuse 12, an dessen Oberseite 13 ein Sichtfenster 14 eines Displays angeordnet ist. Darüber hinaus umfasst ein derartiges Gerät typischerweise auch eine - in Figur 1 nur symbolisch und nicht näher dargestellte - Tastatur 16 zur Betätigung des Laserentfernungsmessers. Die Oberseite 13 des Entfernungsmessers 10 ist in einem Bereich 15 aufgeschnitten dargestellt, um den Sicherungsmechanismus für das erfindungsgemäße Batteriefach zu verdeutlichen.

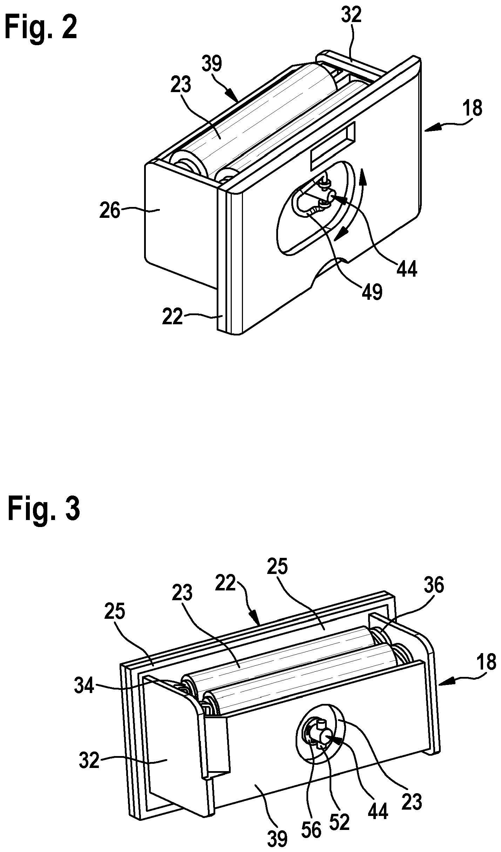

Die Funktionsweise derartiger Entfernungsmesser ist an sich bekannt und soll hier nicht weiter erläutert werden. Es wird hier lediglich auf die einschlägige Literatur verwiesen.
Das Gehäuse 12 des erfindungsgemäßen Entfernungsmessers weist an seiner der Ansicht in Figur 1 abgewandten Gehäuseunterseite eine Einsatzöffnung auf, in die ein Batteriefach 18 (siehe Figur 2) einsetzbar ist. Die Einsatzöffnung des Gehäuses 12 des erfindungsgemäßen Gerätes wird bei eingesetztem Batteriefach von einem rechteckigen Batteriefachdeckel, der als Abdeckplatte bzw. Abdeckelement 22 für die Einsatzöffnung des Gehäuses 12 dient, verschlossen.

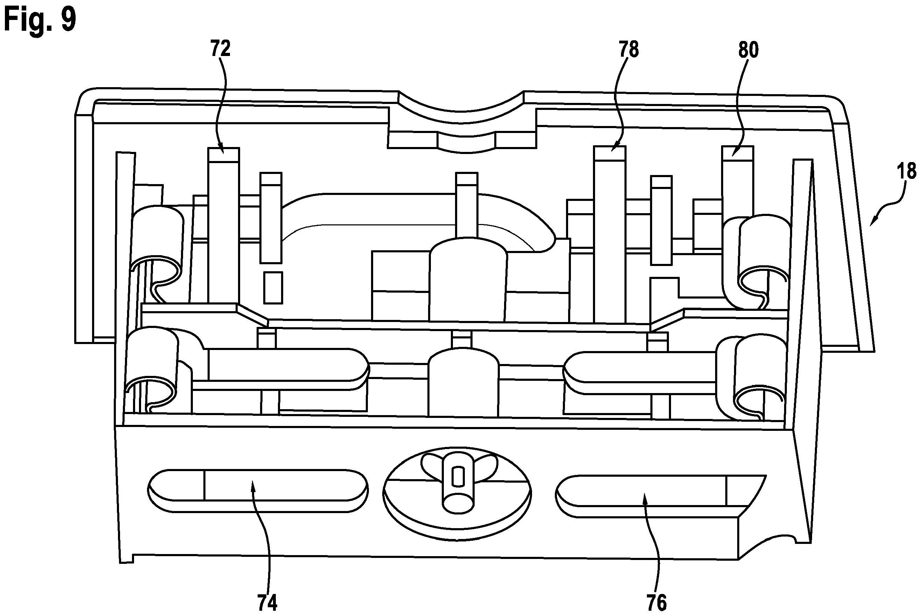

Es ist zweckmäßig und wünschenswert, das Batteriefach gegen ein Eintreten von Staub und Feuchtigkeit abzudichten. Dazu ist zwischen dem Abdeckelement 22 und der Einsatzöffnung des Gehäuses 12 ein Dichtungselement 24 vorgesehen, (siehe beispielsweise Figur 9) das als umlaufendes Dichtungselement am Rand des Abdeckelements 22 oder an der entsprechenden Gegenfläche des Batteriefachs vorgesehen sein kann. Wie insbesondere in der Figur 9 gut erkennbar ist, trägt die Abdeckplatte 22 hierzu an ihrem äußeren Rand eine umlaufende Dichtung 24, mit der ein dichter Abschluss zwischen der Abdeckplatte 22 und der Einsatzöffnung des Gehäuses hergestellt wird.

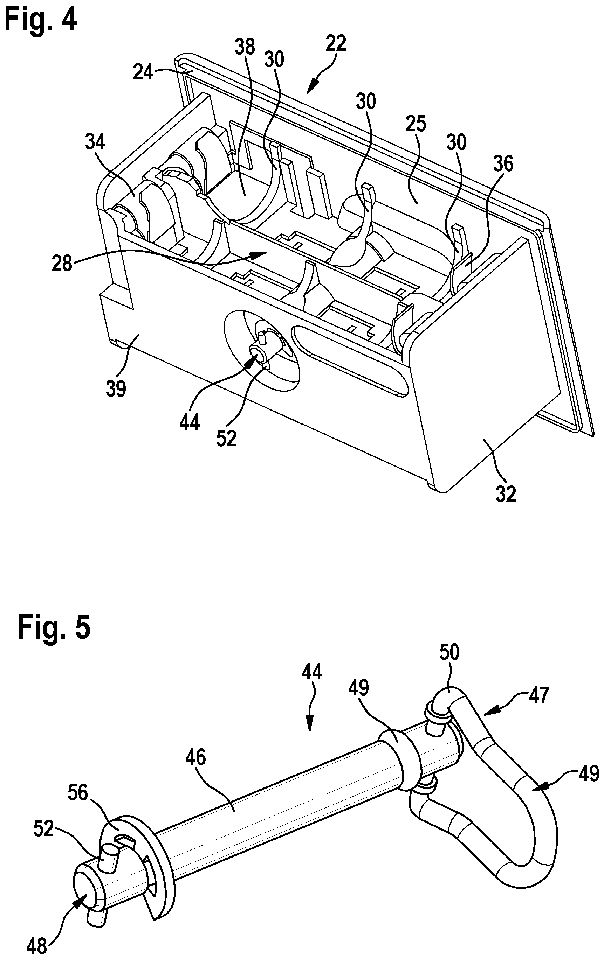

Auch kann - wie weiter unten noch beschrieben wird - zwischen dem Verschlusselement des Batteriefaches, das vorteilhafterweise als ein Verschlussstift 44 ausgebildet ist (siehe hierzu Figur 5) und dem Abdeckelement 22 ein Dichtring 54 vorgesehen sein. Damit kann das Eindringen von Schmutz und Feuchtigkeit auch durch das Durchgangsloch des Verschlusselementes verhindert werden. Mit diesen Sicherungsmaßnahmen ist es insbesondere möglich, das elektrische Gerät trotz entfernbarem Batteriefach nach dem IP54 Standard auszugestalten.

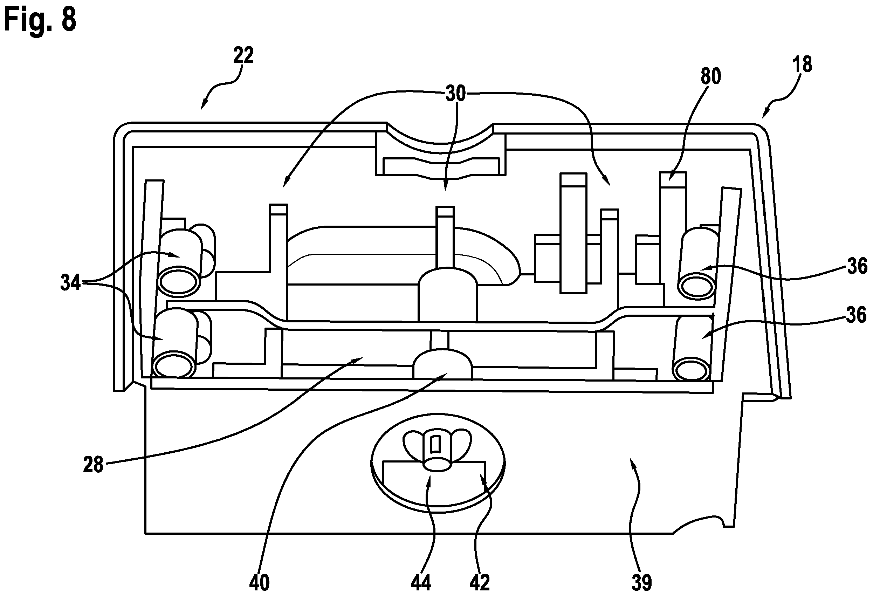

An der Innenseite 25 des Abdeckelementes 22 ist der eigentliche Batteriehalter 26 zur Aufnahme von Batterien vorgesehen. (Siehe hierzu beispielsweise Figur 4 oder Figur 8) Der Batteriehalter 26 ist integral mit dem Abdeckelement 22 ausgeführt und besitzt einen zentralen Träger 28, der etwa mittig von dem Abdeckelement 22 entfernt ist und sich in der Querrichtung des Batteriefachdeckels erstreckt. An seinen gegenüber liegenden Seiten weist der Träger 28 zweimal drei bogenförmige Rippen 30 auf, welche Aufnahmen für die Batterien bilden. Des Weiteren besitzt der Batteriehalter 26 stirnseitige Halteplatten 32, an denen elektrische Kontakte 34, 36 für die Batterien gehalten sind. Über diese Kontakte wird die Energieversorgung des elektrischen Gerätes mit elektrischer Energie aus dem Batteriefach sicher gestellt. Schließlich umfasst der Batteriehalter 26 eine rückwärtige Wandplatte 39, die sich zwischen den beiden stirnseitigen Halteplatten 32, im Wesentlichen parallel zu dem als Batteriefachdeckel wirkenden Abdeckelement erstreckt. Stirnseitige Halteplatten 32, rückwärtige Wandplatte 39, eine Bodenplatte 38 sowie Abdeckelement 22 bilden somit einen schubladenförmigen Einschub, der in die Einsatzöffnung des Gehäuses des Messgerätes eingesetzt und aus dieser auch wieder entnommen werden kann. Batteriehalter 26 und Abdeckelement 22 sind im Ausführungsbeispiel als Kunststoffteil in einem 2-Komponenten Spritzgussverfahren hergestellt.

In dem Batteriefach 18 ist zudem eine Durchgangsbohrung 40 ausgebildet, welche das Abdeckelement 22 und den Batteriehalter 26 axial durchsetzt und in eine zur Gehäuseoberseite offene Ausnehmung 42 in der rückwärtigen Wandplatte 39 des Batteriehalters 26 mündet. (Siehe hierzu insbesondere Figur 4 oder Figur 8) In der Durchgangsbohrung 40 ist ein als Verschlussstift ausgebildetes Verschlusselement 44 (siehe Figur 5) gehalten, das die Durchgangsbohrung 40 axial durchsetzt und mit seinen Enden aus dieser Bohrung heraussteht. Der Verschlussstift 44 besitzt ein stab- oder stiftförmiges Grundelement 46, welches an dem Endbereich 47, der aus dem Abdeckelement 22 an der Gehäuseunterseite vorsteht, eine Querbohrung aufweist, in welcher ein Drahtbügel 49 als Betätigungselement 50 gehalten ist. An seinem gegenüberliegenden Endbereich 48, welcher im Bereich der Ausnehmung 42 aus der rückwärtigen Wandplatte 39 des Batteriehalters 26 heraustritt, trägt das Grundelement 46 ein Verriegelungselement 52 in der Form eines Querstifts, welcher das stabförmige Grundelement 46 durchgreift. Ferner ist an dem Grundelement 46 ein Dichtring 54 gehalten, durch welchen der zwischen dem Grundelement 46 und der Durchgangsbohrung 40 gebildete Ringspalt abgedichtet wird. Insbesondere kann der Dichtring 54 in einer Ringnut des Verschlussstifts 44 gehalten sein. Somit kann der Dichtring 54 zunächst in die Ringnut des Verschlussstifts eingesetzt werden, bevor dieser in die Durchgangsbohrung 40 des Batteriefachs eingeführt wird. Durch die Ringnut ist der Dichtring axial fest positioniert.

Benachbart zu dem Verschlussstift 52 ist auf der zu dem Abdeckelement 22 weisenden Seite ein Sicherungselement 56 in der Form eines Scheibensegments an dem stabförmigen Grundelement 46 vorgesehen, welches derart positioniert ist, dass es an der rückwärtigen Wandplatte 39 des Batteriehalters 26 in Anlage kommt, so dass der Verschlussstift 44 an dem Batteriehalter 26 axial positioniert ist. In vorteilhafter Weise ist die radiale Erstreckung des Scheibensegmentes des Sicherungselementes 56 größer als die entsprechende Erstreckung der Durchgangsbohrung 40, so dass das Sicherungselement 56 axial innenliegend von dem Verriegelungselement 52 einen Anschlag an dem Batteriehalter bildet. Dadurch wird für den Verschlussstift 44 in axialer Richtung eine Anschlagposition an dem Halter des Abdeckelements 22 gebildet, so dass sich ein genau definierter Abstand des Verriegelungselements 52 von dem Halter ergibt. Auf diese Weise kann das Verriegelungselement 52 leicht mit dem Verriegelungsbereich des Gehäuses in Eingriff gebracht werden. Vorteilhafterweise ist das Sicherungselement 56 hierbei als ein Scheibensegment ausgeführt, so dass es im Wesentlichen flächig mit dem Halter in Anlage kommt. Für eine derartige Ausgestaltung des Sicherungselements ist in vorteilhafter Weise die Verwendung von Normteilen möglich.

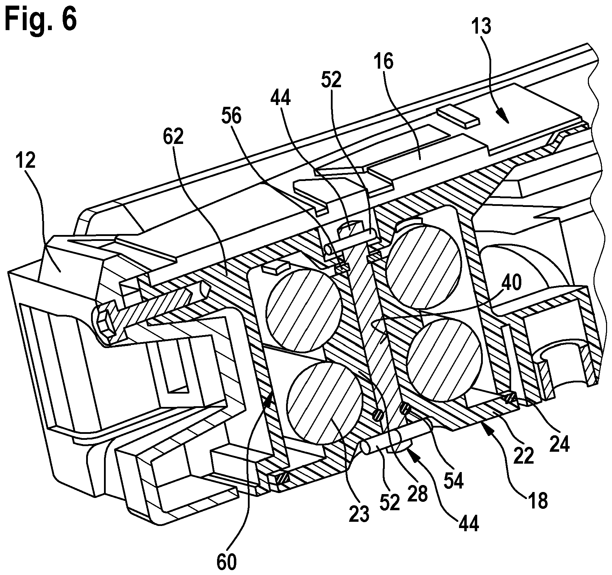

In Figur 6 ist der Verschlussmechanismus nochmals in einer Detaildarstellung der Figur näher dargestellt.

Das Gerätegehäuse weist hierzu auf seiner Innenseite im Verriegelungsbereich eine Auflaufschräge auf, mit welcher das Verriegelungselement derart in Eingriff kommt, dass durch ein Verdrehen des Verschlussstifts in eine Verriegelungsposition der Batteriefachdeckel in das Batteriefach gezogen wird, wie nachfolgend im Detail erläutert werden soll.

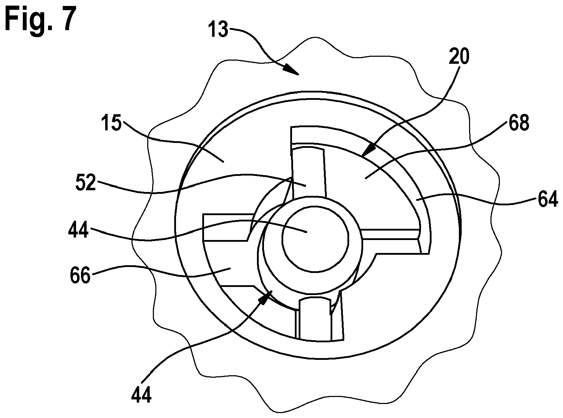

Wie insbesondere in der Figur 6 erkennbar ist, weist die Einsatzöffnung 60 im Bereich Ihrer geräteoberseitigen Innenwandung 62 eine Ausnehmung 64 auf, welche zur Gehäuseoberseite 13 einen Hohlraum bildet. Im Bereich dieser Ausnehmung 64 ist eine Durchlassöffnung 66 vorgesehen (siehe Figur 7), welche so ausgebildet ist, dass in einer vorgegebenen Position - der Öffnungsposition - der Verschlussstift 44 mit dem Verriegelungsstift 52 durch die Durchlassöffnung 66 gesteckt werden kann, wie dies in den Figuren 1 und 7 gezeigt ist. Von der Durchlassöffnung 66 ausgehend ist an dem Boden der Ausnehmung 66 eine Auflaufschräge 68 vorgesehen, die sich in Umfangsrichtung betrachtet - ausgehend von der Durchlassöffnung 66 - über einen Winkelbereich von 90° erstreckt. Die Anordnung ist dabei so getroffen, dass der Verriegelungsstift 52 mit den Auflaufschrägen 68 zusammenwirkt, um das Batteriefach 18 gegen das Gehäuse 12 des elektrischen Gerätes zu ziehen, wenn der Verschlussstift 44 aus der Öffnungsstellung in eine Verriegelungsstellung verdreht wird.

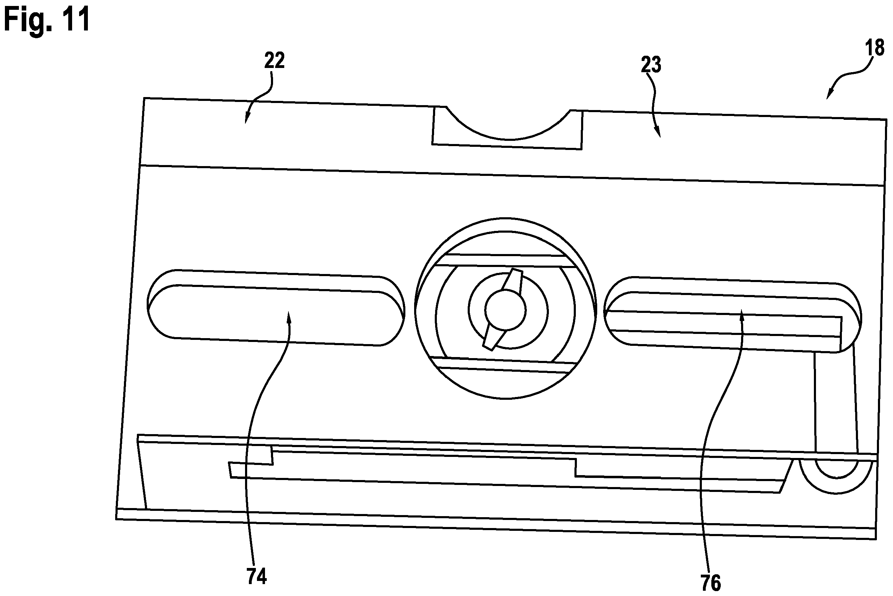

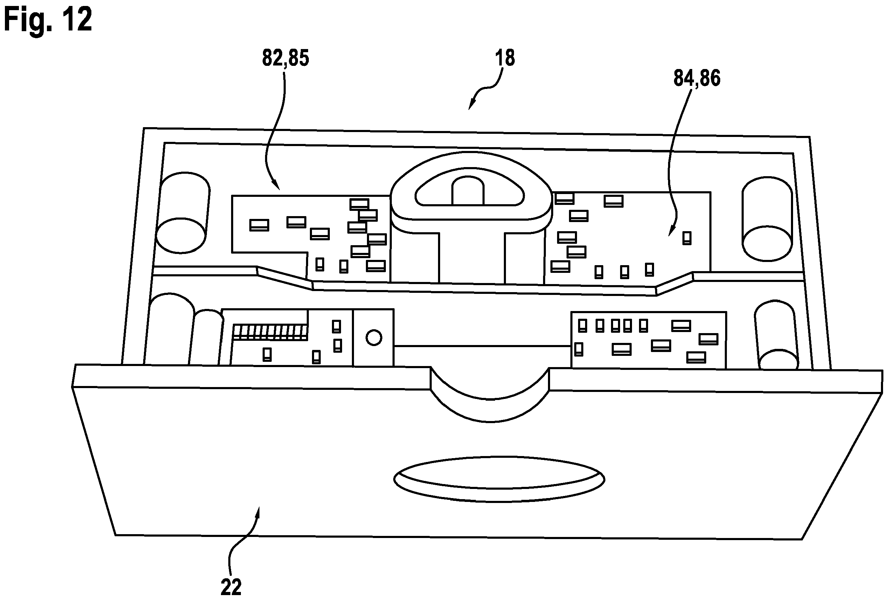

Zum Verschließen und Sichern des erfindungsgemäßen Batteriefachs 18 in einem elektrischen Gerät wird das Batteriefach mit dem drin angeordneten Kommunikationsmodul (siehe Figur 11 oder 12) und darin gehaltenen in die Einsatzöffnung 60 eingesetzt. Dabei wird der Verschlussstift 44 durch Drehen an dem Drahtbügel 49 in seine Öffnungsposition gebracht, in welcher der Verriegelungsstift 52 durch den Durchlass 66 gesteckt werden kann. Zum Verriegeln des Batteriefachs 18 wird der Verschlussstift 44 über den Drahtbügel 49 im Gegenuhrzeigersinn gedreht, so dass das Verriegelungselement 52 über die Auflaufschräge 68 läuft und dabei das Batteriefach 18 fest in das Gehäuse 12 des elektrischen Gerätes. Dabei kommt der Dichtring 24 des Abdeckelementes 22 mit der Wand des Gehäuses 12 in Anlage und bewirkt einen dichten Verschluss des Batteriefachs.

Zum Austausch der Batterien 10 oder dem Wechsel des Batteriefaches, beispielsweise um das elektrische Gerät mit einem anderen Kommunikationsmodul zu versehen, wird das Batteriefach 18 aus dem Gehäuse 12 herausgenommen. Dazu wird der Verschlussstift 44 über den Bügel 49 um 90° in die Öffnungsposition zurückgedreht, so dass der Verriegelungsstift 52 durch den Durchlass 66 hindurchtreten und das Batteriefach 18 vollständig aus Gehäuse 12 entnommen werden kann. Dann können die Batterien einfach aus dem Batteriehalter 26 entnommen und gegen neue ausgetauscht werden oder in entsprechender Weise ein neues Batteriefach mit möglicherweise geändertem Kommunikationsmodul in das Gerät wieder eingesetzt werden.

Außerdem wird der Verschlussstift durch die Führung in dem Halter stabilisiert, so dass er leicht mit dem Verriegelungsbereich der geräteseitigen Aufnahme in Eingriff bringbar ist, da die lange Führung ein Verkippen des Verschlussstifts ausschließt. Die Handhabung wird insbesondere erleichtert, wenn der Verschlussstift zentral durch das Abdeckelement und den Halter geführt ist. Dann wird das Batteriefach gleichmäßig in die Öffnung des Gehäuses hineingezogen, wodurch eine gute Abdichtung der Öffnung des Gehäuses durch das Batteriefacherreicht wird.

Selbstverständlich kann das erfindungsgemäße Batteriefach auch anderweitig im Gehäuse des elektrischen Gerätes gesichert werden. So ist beispielsweise ein Ein- bzw. Ausrasten der Schublade mittels elastisch deformierbaren Rastelementen Möglich. Für ein solches System bietet es sich an, die Schublade des Batteriefaches nicht auf der Rückseite des Gerätes einzusetzen, sondern insbesondere an der Unterseite 70 (siehe Figur 1) einzuschieben.

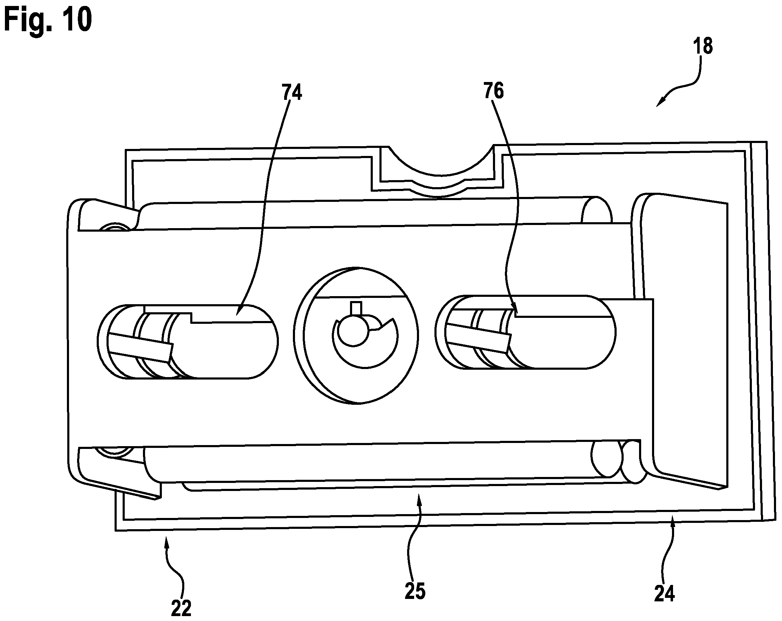

Figur 9 zeigt ein erfindungsgemäßes Batteriefach mit einem "Ein-Draht - Kommunikations-Pin" 72 sowie zwei Steckplätzen 74, 76 für die Kommunikationselektronik. Der Kommunikationspin 72 dient der Datenübermittlung zwischen der Elektronik des Messgerätes, beispielsweise der Auswerteeinheit des Gerätes und dem erfindungsgemäßen Modul zur externen Kommunikation. Neben dem hier gezeigt Kommunikationspin 72 ist es jedoch auch prinzipiell möglich, die Datenkommunikation über die Anschlüsse 78, 80 zur Energieversorgung des Gerätes laufen zu lassen. Auch die Verwendung einer Mehrzahl von Kommunikationspins ist im Rahmen der Erfindung möglich. Figur 10 zeigt das modifizierte, erfindungsgemäße Batteriefach ohne Batterien in einer anderen Perspektive zur Verdeutlichung der Steckplätze für die externe Kommunikation. Figur 11 zeigt eine entsprechende Ansicht mit eingesetzten Batterien.

Figur 12 zeigt eine perspektivische Aufsicht auf das erfindungsgemäße Batteriefach mit eingesetzter Kommunikationselektronik. Zwischen den Plätzen für die Batterien befinden sich im vorliegenden Ausführungsbeispiel zwei Platinen für die Kommunikationselektronik. Auf der Platine (Leiterplatte) 83 befindet sich die Elektronik des Kommunikationsadapters 85, der die vom Messgerät über den Kommunikationspin 72 gelieferten Daten aufarbeitet und zur Sendung an eine externe Anwendung, wie beispielsweise einem Computersystem vorbereitet. Der Kommunikationsadapter 85 sorgt auch für die Energieversorgung des Kommunikationsmoduls. In Vorteilhafter Weise bezieht das Kommunikationsmodul seinen Energiebedarf aus den im Batteriefach befindlichen Energiespeicherelementen. Der Kommunikationsadapter kann zusätzlich auch über einen Kondensator verfügen, der als Energiezwischenspeicher funktioniert und eine sichere Datenübertragung noch gewährleisten kann, auch wenn die Batterien des Systems leer sind. Auf der Platine 84 befindet sich die eigentliche Sendeeinheit der Kommunikationsschnittstelle, beispielsweise also eine Bluetooth-Chip oder ein entsprechendes anderes Schnittstellen Modul. Somit kann das erfindungsgemäße elektrische Gerät kabellos mit einem Computer oder einem PDA oder einer anderen externen Anwendung kommunizieren und Daten austauschen. Dabei ist das erfindungsgemäße Kommunikationsmodul nicht auf die Sendung von Daten an eine externe Anwendung beschränkt. Genauso gut ist es erfindungsgemäß möglich, Daten von einer externen Anwendung zu empfangen. So kann beispielsweise ein Grundriss eines Gebäudes oder ein Bau- oder Raumplan von einem externen Computersystem in des elektrische Gerät, beispielsweise einen Entfernungsmesser eingespielt werden und die Strecken des Plans mit dem Messgerät überprüft werden.

In alternativen Ausführungsformen können der Kommunikationsadapter und das Sendemodul - entgegen der in Figur 12 dargestellten Ausführung - auch auf einer Leiterplatte/Platine integriert sein. Hier gilt es den Bauraum des Batteriefaches effektiv zu nutzen und den baulichen Gegebenheiten eines solchen Batteriefaches Rechnung zu tragen. Da sich die ganze Kommunikationselektronik im IP-geschützten, erfindungsgemäßen Batteriefach befindet, sind in vorteilhafter Weise keine zusätzlichen Maßnahmen zum Schutz der Kommunikationselektronik notwendig.

Erfindungsgemäß ist es somit möglich, einen Laserentfernungsmesser um die Funktion insbesondere drahtloser Kommunikation zu erweitern und dabei die batteriegestützte Spannungsversorgung und den gewünschten IP-Schutz aufrecht zu erhalten. Das Grundgerät, welches das Kommunikationserweiterungsmodul aufnehmen kann, wird dabei mit zusätzlichen Kosten noch mit anderen Nachteilen belastet.

## Patentansprüche

1. Batteriefach (18) für einen handgehaltenen Laserentfernungsmesser zum reversiblen Einbringen in den Laserentfernungsmesser, mit zumindest einer Aufnahme (26) für ein Energiespeicherelement (23) und zumindest einem Kontaktelement (78,80) zur elektrischen Kontaktierung des Batteriefachs (18) mit dem Laserentfernungsmesser, **dadurch gekennzeichnet, dass** eine Schnittstelle (85,86) zur Kommunikation mit einer zum Laserentfernungsmesser externen Anwendung in dem Batteriefach (18) vorgesehen ist.

2. Batteriefach (18) nach Anspruch 1, **dadurch gekennzeichnet, dass** die Schnittstelle (85, 86) zu einer drahtlosen Kommunikation vorgesehen ist.

3. Batteriefach (18) nach Anspruch 2, **dadurch gekennzeichnet, dass** die Schnittstelle (85,86) zur drahtlosen Kommunikation einem Kommunikationsstandard, insbesondere dem Bluetooth oder WLAN oder USB oder Firewire, Standard unterliegt.

4. Batteriefach (18) nach einem der vorhergehenden Ansprüche, **dadurch gekennzeichnet, dass** das Batteriefach über zumindest ein weiteres Kontaktelement (72) zur Datenübertragung zwischen dem Laserentfernungsmesser und dem Batteriefach (18) verfügt.

5. Batteriefach (18) nach einem der vorhergehenden Ansprüche, **dadurch gekennzeichnet, dass** das Batteriefach (18) über zumindest eine Elektronikeinheit (82,84,85,86), insbesondere eine Elektronikeinheit für die Kommunikationselektronik verfügt.

6. Batteriefach (18) nach einem der vorhergehenden Ansprüche, **dadurch gekennzeichnet, dass** das Batteriefach (18) schubladenförmig mit zumindest einer Aufnahme (26) und zumindest einem als Batteriefachdeckel dienendem Abdeckelement (22) ausgebildet ist.

7. Batteriefach (18) nach Anspruch 6, **dadurch gekennzeichnet, dass** das Abdeckelement (22) auf seiner der Aufnahme (26) zugewandten Seite über Dichtmittel (24) verfügt.

8. Batteriefach (18) nach einem der vorhergehenden Ansprüche, **dadurch gekennzeichnet, dass** das Batteriefach ein nach dem IP54 Standard geschütztes Batteriefach ist.

9. Handgehaltener Laserentfernungsmesser mit einem Batteriefach (18) nach zumindest einem der vorhergehenden Ansprüche.

10. System bestehend aus zumindest einem handgehaltenen Laserentfernungsmesser nach Anspruch 9 sowie zumindest zwei Batteriefächern (18) nach Anspruch 1, **dadurch gekennzeichnet, dass** die Schnittstelle (85,86) zur drahtlosen Kommunikation des ersten Batteriefaches (18) mit einem ersten Kommunikationsstandard und die Schnittstelle (85,86) zur drahtlosen Kommunikation des zweiten Batteriefaches mit einem zweiten Kommunikationsstandard versehen ist, wobei insbesondere der erste und der zweite Kommunikationsstandard nicht identisch sind.

## Claims

1. Battery compartment (18) for a hand-held laser distance finder, for reversible introduction into the laser distance finder having at least one holder (26) for an energy storage element (23) and at least one contact element (78, 80) for making electrical contact between the battery compartment (18) and the laser distance finder, **characterized in that** an interface (85, 86) is provided in the battery compartment (18) for communication with an application which is external with respect to the laser distance finder.

2. Battery compartment (18) according to Claim 1, **characterized in that** the interface (85, 86) is provided for wireless communication.

3. Battery compartment (18) according to Claim 2, **characterized in that** the interface (85, 86) for wireless communication is subject to a communication standard, in particular the Bluetooth or WLAN or USB or Firewire standard.

4. Battery compartment (18) according to one of the preceding claims, **characterized in that** the battery compartment has at least one further contact element (72) for transmitting data between the laser distance finder and the battery compartment (18).

5. Battery compartment (18) according to one of the preceding claims, **characterized in that** the battery compartment (18) has at least one electronic unit (82, 84, 85, 86), in particular an electronic unit for communication electronics.

6. Battery compartment (18) according to one of the preceding claims, **characterized in that** the battery compartment (18) is embodied in the form of a drawer with at least one holder (26) and at least one cover element (22) serving as a battery compartment lid.

7. Battery compartment (18) according to Claim 6, **characterized in that** the cover element (22) has sealing means (24) on its side facing the holder (26).

8. Battery compartment (18) according to one of the preceding claims, **characterized in that** the battery compartment is a battery compartment which is protected according to the IP54 standard.

9. Hand-held laser distance finder, having a battery compartment (18) according to at least one of the preceding claims.

10. System composed of at least one hand-held laser distance finder according to Claim 9 and at least two battery compartments (18) according to Claim 1, **characterized in that** the interface (85, 86) is provided for wireless communication of the first battery compartment (18) with a first communication standard, and the interface (85, 86) is provided for wireless communication of the second battery compartment with a second communication standard, wherein, in particular, the first and the second communication standards are not identical.

## Revendications

1. Compartiment à batterie (18) pour télémètre laser portatif destiné à être introduit de manière réversible dans le télémètre laser, comportant au moins un logement (26) destiné à un élément de stockage d'énergie (23) et au moins un élément de contact (78, 80) destiné à la mise en contact électrique du compartiment à batterie (18) avec le télémètre laser,
**caractérisé en ce qu'**une interface (85, 86) destinée à communiquer avec une application externe au télémètre laser est prévue dans le compartiment à batterie (18).

2. Compartiment à batterie (18) selon la revendication 1, **caractérisé en ce que** l'interface (85, 86) est prévue pour une communication sans fil.

3. Compartiment à batterie (18) selon la revendication 2, **caractérisé en ce que** l'interface (85, 86) destinée à la communication sans fil respecte une norme de communication, en particulier la norme Bluetooth ou WLAN ou USB ou Firewire.

4. Compartiment à batterie (18) selon l'une des revendications précédentes, **caractérisé en ce que** le compartiment à batterie comporte au moins un autre élément de contact (72) destiné à transmettre des données entre le télémètre laser et le compartiment à batterie (18).

5. Compartiment à batterie (18) selon l'une des revendications précédentes, **caractérisé en ce que** le compartiment à batterie (18) comporte au moins une unité électronique (82, 84, 85, 86), en particulier une unité électronique destinée à l'électronique de communication.

6. Compartiment à batterie (18) selon l'une des revendications précédentes, **caractérisé en ce que** le compartiment à batterie (18) est réalisé sous la forme d'un tiroir comportant au moins un logement (26) et au moins un élément formant couvercle (22) servant de couvercle du compartiment à batterie.

7. Compartiment à batterie (18) selon la revendication 6, **caractérisé en ce que** l'élément formant couvercle (22) présente des moyens d'étanchéité (24) sur son côté qui est tourné vers le logement (26).

8. Compartiment à batterie (18) selon l'une des revendications précédentes, **caractérisé en ce que** le compartiment à batterie est un compartiment à batterie protégé selon la norme IP54.

9. Télémètre laser portatif comportant un compartiment à batterie (18) selon au moins l'une des revendications précédentes.

10. Système comprenant au moins un télémètre laser portatif selon la revendication 9 et au moins deux compartiments à batterie (18) selon la revendication 1, **caractérisé en ce que** l'interface (85, 86) de communication sans fil du premier compartiment à batterie (18) est pourvue d'une première norme de communication et l'interface (85, 86) de communication sans fil du second compartiment à batterie est pourvue d'une seconde norme de communication, dans lequel les première et seconde normes de communication ne sont notamment pas identiques.
